# EUROPEAN PATENT APPLICATION

(11) **EP 1 132 448 A2**
(43) Date of publication of application: **12.09.2001**
(21) Application number: 01105809.6
(22) Date of filing: 08.03.2001
(51) Int. Cl.: C09K 3/18, C03C 17/25

(54) **Article with antifogging film and process for producing same**

(30) Priority: 09.03.2000 JP 2000064361
(71) Applicant: Central Glass Company, Limited, Ube-shi, Yamaguchi-ken 755-0001 (JP)
(72) Inventor: Yamazaki, Seiji, c/o Central Glass Company, Ltd., Matsusaka-shi, Mie 515-0001 (JP); Yamamoto, Hideki, c/o Central Glass Company, Ltd., Matsusaka-shi, Mie 515-0001 (JP); Honjo, Hiroshi, c/o Central Glass Company, Ltd., Matsusaka-shi, Mie 515-0001 (JP); Nishida, Yoshihiro c/o Central Glass Company, Ltd., Matsusaka-shi, Mie 515-0001 (JP)
(74) Representative: Manitz, Finsterwald & Partner

(57) **Abstract**

An antifogging article includes a substrate and an antifogging film covering the substrate. The antifogging film contains (a) 30-60 wt% of a metal oxide constituting a matrix phase of the antifogging film and (b) 40-70 wt% of ultrafine oxide particles constituting a dispersed phase of the antifogging film. The antifogging film is prepared by a process including the steps of (1) applying a sol containing (i) a precursor of the metal oxide, (ii) the ultrafine oxide particles, and (iii) a strong acid catalyst to the substrate, thereby forming thereon a precursory film; and (2) heating the precursory film into the antifogging film. The antifogging article is superior in hydrophilicity and antifogging property.

## Description

### BACKGROUND OF THE INVENTION

The present invention relates to an article with an antifogging film, which is useful for windows, mirrors and the like in various fields such as architectural, industrial and automotive ones, and a process for producing the article.

In recent years, there have been proposals of forming photocatalytic films on the substrate surface for providing hydrophilicity and antifogging property.

Japanese Patent Laid-open Publication JP-A-5-253544 discloses a process for producing a plate-like member with deodorizing function by applying a glaze to a substrate and then by spraying an anatase-type TiO₂ powder to the glaze layer.

JP-A-7-232080, which corresponds to U.S. Patents 6,027,797 and 5,853,866, discloses a multifunctional material with photocatalytic function, prepared by forming a binder layer on a substrate and then by forming a photocatalytic layer of photocatalytic particles on the binder layer.

JP-A-9-59042 discloses a transparent substrate with an antifogging coating containing photocatalytic titania particles.

JP-A-5-302173 discloses a hydrophilic film containing an inorganic substance having an average particle diameter of 5 *µ* m or less and at least silica.

JP-A-8-119673 discloses a process for making a glass hydrophilic by applying a glass treatment agent to a glass surface, followed by baking. This agent is prepared by adding a metal oxide to a curable silicone resin solution.

JP-A-10-114543 discloses a process for producing an antifogging film by forming a silica-and-alumina-based complex oxide film on a substrate and then by immersing the coated substrate in hot pure water.

### SUMMARY OF THE INVENTION

It is an object of the present invention to provide an antifogging article which is superior in hydrophilicity and antifogging property.

It is another object of the present invention to provide a coating agent for forming an antifogging film of the antifogging article.

It is another object of the present invention to provide a process for producing such antifogging article.

According to the present invention, there is provided an antifogging article comprising a substrate; and an antifogging film covering the substrate. This antifogging film comprises (a) 30-60 wt% of a metal oxide constituting a matrix phase of the antifogging film; and (b) 40-70 wt% of ultrafine oxide particles constituting a dispersed phase of the antifogging film. The antifogging film is prepared by a process comprising (I) applying a sol (i.e., a coating agent) comprising (i) a precursor of the metal oxide, (ii) the ultrafine oxide particles, and (iii) a strong acid catalyst to the substrate, thereby forming thereon a precursory film; and (2) heating the precursory film into the antifogging film. This heating is conducted at a temperature preferably of 150 to 600°C.

### DESCRIPTION OF THE PREFERRED EMBODIMENTS

The ultrafine oxide particles are not reactive with a precursor (e.g., a metal alkoxide) of the metal oxide. For example, these particles are not reactive with functional group(s) of a metal alkoxide, when the metal alkoxide is subjected to hydrolysis and polycondensation. Thus, these particles do not get together into aggregates (secondary particles) in the sol (coating agent), but are uniformly dispersed in the form of primary particles in the sol, since the sol contains the precursor and a strong acid catalyst in addition to the ultrafine oxide particles. Therefore, the ultrafine oxide particles are uniformly dispersed in the antifogging film, too. With this, the antifogging film (a special metal oxide film) has a large specific surface area and thereby becomes superior in water holding capacity. Furthermore, the ultrafine oxide particles exist on the antifogging film surface, too. With this, the antifogging film surface becomes uneven in configuration. Furthermore, water once adsorbed on the antifogging film surface may penetrate into the antifogging film internal structure. With this, the entirety of the antifogging film may become hydrophilic. Therefore, a water film once formed on the antifogging film surface may last for a long time. Thus, the antifogging film becomes superior for a long time in hydrophilicity and antifogging property. Furthermore, it has no defects (e.g., cracks), a sufficient visible light transmittance, a superior durability, and a good abrasion resistance. Furthermore, the color tone of the light transmitted through the antifogging film and that of the light reflected from the antifogging film can be substantially the same as those of its substrate. Therefore, the antifogging film can be used for various indoor and outdoor glass articles such as (1) architectural, automotive and industrial window panes, (2) bathroom, vehicular, cosmetic and road mirrors, and (3) various other uses required to have hydrophilicity and antifogging property.

As stated above, the metal oxide constitutes a matrix phase of the antifogging film. In other words, the metal oxide is in the form of a three·dimensional network structure, thereby forming a skeleton of the antifogging film. Thus, the metal oxide is not in the form of particles and thereby does not have any particular particle size. In contrast, the ultrafine oxide particles are dispersed in the matrix phase (skeleton) of the antifogging film to constitute a dispersed phase, and provide the film with antifogging property.

The precursor for forming a metal oxide constituting a matrix phase of the antifogging film is not particularly limited, as long as it produces an amorphous metal oxide by heating. The metal oxide can be selected from silica (silica is defined as a metal oxide in this application including the after-mentioned claims), zirconia, titania and alumina, and is preferably at least two of these oxides. In particular, the metal oxide is more preferably a combination of silica and zirconia for providing (1) durability, (2) the capability for holding the ultrafine oxide particles, (3) the easiness of the antifogging film formation, and the like.

Examples of the precursor are metal alkoxides and metal chlorides. Examples of a raw material of the silica contained in the antifogging film matrix phase are silicon alkoxides (e.g., tetraethoxysilane, tetramethoxysilane, monomethyltriethoxysilane, monomethyltrimethoxysilane, dimethyldimethoxysilane, and dimethyldiethoxysilane), other tetraalkoxysilanes, and other alkylalkoxysilanes. Examples of a raw material of the titania contained therein are titanium alkoxides such as titanium tetraisopropoxide and titanium tetra-n-butoxide. Examples of a raw material of the alumina contained therein are aluminum alkoxides such as aluminum butoxide. Examples of a raw material of the zirconia contained therein are zirconium alkoxides (e.g., zirconium butoxide) and zirconium chloride.

As stated above, the metal oxide constituting a matrix phase of the antifogging film is in an amount of 30-60 wt%, preferably 35-50 wt%, and the ultrafine oxide particles are in an amount of 40-70 wt%, preferably 50-65 wt%. These amounts are based on the total weight of the metal oxide and the ultrafine oxide particles in terms of oxide. When this metal oxide contains silica and zirconia, the difference between the zirconia content (by wt%) of the antifogging film and the silica content (by wt%) of the antifogging film is preferably 5 wt% or less, more preferably 0 wt%. With this, it becomes possible to provide the antifogging film with acid resistance and alkali resistance. If the metal oxide content is greater than 60 wt%, the advantageous effect of using the ultrafine oxide particles becomes insufficient. If the metal oxide content is less than 30 wt%, the antifogging film becomes inferior in durability and abrasion strength. If the metal oxide content is out of the range of 30-60 wt%, the practical use of the antifogging film is limited.

The ultrafine oxide particles are made preferably of at least one of silica and alumina. This silica is preferably a water-absorbing crystalline silica, amorphous silica, glassy silica, or colloidal silica. Of these, colloidal silica is more preferable. The alumina used for the ultrafine particles is preferably an alumina having a crystal structure of boehmite. The ultrafine oxide particles are not particularly limited in particle size, and their particle size is preferably 50 nm or less, more preferably 20 nm or less. If it is greater than 50 nm, the film may become inferior in transparency and durability.

The antifogging film has a thickness of preferably 50 to 250 nm, more preferably 100 to 200 nm. If it is less than 50 nm, a water film once formed on the antifogging film may not last for a long time. Thus, the antifogging film may gradually have fogging thereon. If it is greater than 250 nm, adhesion between the substrate and the antifogging film may become inferior. With this, the antifogging film may become inferior in durability, although it is superior for a long time in hydrophilicity, antifogging property and stain resistance.

The antifogging article can be produced by a process comprising the steps of (a) providing a sol comprising (i) the precursor, (ii) ultrafine oxide particles, and (iii) a strong acid catalyst; (b) applying the sol to a substrate, thereby forming thereon a precursory film; and (c) heating the precursory film at a temperature of 150 to 600°C, thereby forming an antifogging film on the substrate. In this process, the sol can be prepared by adding ultrafine oxide particles and a diluting solvent to a metal alkoxide solution, followed by addition of a strong acid catalyst and then by stirring.

The strong acid catalyst of the sol can be a strong acid (pH: 2 or lower) that is at least one selected from hydrochloric acid, sulfuric acid, and nitric acid. By using a strong acid having a pH of 2 or lower, it becomes possible to accelerate the hydrolysis of a metal alkoxide and the subsequent polycondensation and to suppress the formation of aggregates (secondary particles) of the ultrafine oxide particles.

Examples of the diluting solvent to be used in the process are alcohols (e.g., methanol, ethanol, isopropanol and butanol), esters (e.g., ethyl acetate and butyl acetate), cellosolves (methyl cellosolve, ethyl cellosolve and butyl cellosolve), and mixtures of at least two of these. It is preferable to choose a diluting solvent that is the same as a solvent contained in the metal alkoxide solution. Furthermore, the amount of the diluting solvent may be chosen depending on the evaporation rate and/or viscosity of the metal alkoxide solution.

It is preferable that the sol further comprises an organic polymer soluble in alcohol. With this, it becomes possible to make the antifogging film have a porous structure. Therefore, the antifogging film is improved in water holding capacity. In other words, a water film formed on the antifogging film is maintained for a long time. Thus, the antifogging film is improved for a long time in hydrophilicity and antifogging property. Examples of the organic polymer are hydroxypropyl cellulose, polyvinyl pyrrolidone, polyvinyl acetate, polyvinyl alcohol, and polyethylene glycol.

The manner of applying the sol (coating agent) is not particularly limited. For example, it can be selected from spin coating, dip coating, roller coating, reverse coating, flexography, curtain coating, nozzle coating, and spraying. It is preferable that the sol has a total solid matter concentration of about 1-6 wt% and a viscosity of about 2-10 cP.

In the process, it is preferable that the heating is conducted at a temperature of 150-600°C for about 10-30 min. If it is lower than 150°C, the evaporation of the solvent and the like may become insufficient. With this, the antifogging film may become inferior in durability. If it is higher than 600°C, the glass substrate may have a deformation (e.g., a warp toward the antifogging film).

The substrate is not limited to particular materials. It may be selected from glass, resin, metal and ceramic, as long as it does not deteriorate by the dryings. It is typically a glass plate, which can be selected from float glass plates for automotive, architectural and industrial uses, clear and various color glass plates of green, bronze and other colors, various functional glass plates, tempered glass plates, laminated glass plates, double-layered glass plates, and flat and bent glass plates. The glass plate may have a thickness of about 2.0-12 mm, preferably about 2.3-3.5 mm. In fact, it is preferably about 3.0-8 mm for architectural use and about 2.0-5.0 mm for automotive use.

According to the invention, it is optional to form the antifogging film on at least one of various functional films such as a heat shielding film, an ultraviolet shielding film, an electromagnetic shielding film, a conductive film, an alkali barrier film, a colored film, and a decorating film.

The following nonlimitative examples are illustrative of the present invention.

### EXAMPLE 1

At first, (a) a reagent of a silica precursor sol (a stable sol subsequent to hydrolysis and polycondensation), COLCOAT 6P (trade name) of Nippon Soda Co., for forming the matrix phase silica of the antifogging film, then (b) a reagent of zirconium chloride (a zirconia precursor) of Kishida Chemical Co., then (c) a reagent of silica (colloidal silica) ultrafine particles (particle size: 10-20 nm; median particle size: 12 nm), IPA-ST-S (trade name) of Nissan Chemical Industries Ltd., and then (d) a reagent of hydrochloric acid (as a catalyst) of Kishida Chemical Co. were added to a denatured alcohol (solvent; ethanol mixed with isopropyl alcohol), EKINEN F-1 (trade name) of Kishida Chemical Co. These reagents (a), (b) and (c) were in amounts such that the resulting matrix phase silica, zirconia and silica ultrafine particles were respectively in amounts of 20 wt%, 20 wt% and 60 wt% in terms of oxide. The resulting solution was stirred at room temperature to prepare a coating liquid. The coating liquid was adjusted to having a solid matter concentration of 4 wt% in terms of oxide.

Separately, a major surface of a soda-lime glass plate (widths: 10cm; thickness: 2mm) was sufficiently ground with cerium oxide, then washed with clean water, then rinsed with ion-exchanged water, then dried to remove water, and then wiped with isopropyl alcohol, thereby preparing a substrate.

Then, the coating liquid was applied to the major surface of the substrate by spin coating. Then, the coated substrate was heated at 180°C for 30 minutes, thereby preparing a test sample having an antifogging film formed on the substrate. The obtained test sample was found to be neutral in color tone with respect to the reflection light and the transmitted light. The antifogging film was found to have a thickness of 200 nm by the measurement with a surface roughness meter, DEKTAK 3030 (trade name) of SLOAN Co.

### EXAMPLE 2

Example 1 was repeated except in that the reagents (a), (b) and (c) were in amounts such that the resulting matrix phase silica, zirconia and silica ultrafine particles were respectively in amounts of 25 wt%, 25 wt% and 50 wt% in terms of oxide. The antifogging film was found by the same measurement as that of Example 1 to be 180 nm in thickness.

### EXAMPLE 3

Example 1 was repeated except in that the reagents (a), (b) and (c) were in amounts such that the resulting matrix phase silica, zirconia and silica ultrafine particles were respectively in amounts of 15 wt%, 15 wt% and 70 wt% in terms of oxide. The antifogging film was found by the same measurement as that of Example 1 to be 230 nm in thickness.

### EXAMPLE 4

Example 1 was repeated except in that isopropyl titanate (i.e., titanium tetraisopropoxide as a titania precursor) was used as the reagent (b) in place of zirconium chloride. The antifogging film was found by the same measurement as that of Example 1 to be 150 nm in thickness.

### EXAMPLE 5

Example 1 was repeated except in that the coated substrate was heated at 300°C for 10 minutes. The antifogging film was found by the same measurement as that of Example 1 to be 150 nm in thickness.

### EXAMPLE 6

Example 1 was repeated except in that the coated substrate was heated at 500°C for 10 minutes. The antifogging film was found by the same measurement as that of Example 1 to be 100 nm in thickness.

### COMPARATIVE EXAMPLE 1

Example 1 was repeated except in that the reagents (a), (b) and (c) were in amounts such that the resulting matrix phase silica, zirconia and silica ultrafine particles were respectively in amounts of 40 wt%, 40 wt% and 20 wt% in terms of oxide. The antifogging film was found by the same measurement as that of Example 1 to be 200 nm in thickness.

### COMPARATIVE EXAMPLE 2

Example 1 was repeated except in that the reagents (a), (b) and (c) were in amounts such that the resulting matrix phase silica, zirconia and silica ultrafine particles were respectively in amounts of 10 wt%, 10 wt% and 80 wt% in terms of oxide. The antifogging film was found by the same measurement as that of Example 1 to be 220 nm.

### EVALUATION TESTS

The resulting test samples (the coated substrates) of Examples 1 to 6 and Comparative Examples 1 to 2 were subjected to the following evaluation tests.

Immediately after the production of the test sample, an initial hydrophilicity test was conducted by measuring the contact angle of a water drop (20 *µ* l) disposed on the antifogging film of the test sample at room temperature in an atmosphere of air using CA-A type tester of Kyowa Kaimen Kagaku Co. The test sample was judged to be satisfactory when the contact angle was 5 degrees or less. Each test sample of Examples 1-6 and Comparative Examples 1-2 was satisfactory in this test. In fact, the initial contact angle of each test sample of Examples 1-2 and 4-5 was in a range of 1-2 degrees. Furthermore, that of Examples 3 and 6 was in a range of 2-3 degrees.

A durability test was conducted by allowing the test sample to stand still in a room having a temperature between 20-35°C and a relative humidity between 40-90%.

Each test sample of Examples 1·6 was subjected to a hydrophilicity durability test in which the contact angle of a water drop was measured in the same manner as that of the initial hydrophilicity test, after 96 hr, 192 hr, 384 hr, 576 hr, 672 hr, 768 hr, 840 hr and 960 hr of the durability test. The test sample was also judged to be satisfactory when the contact angle was 5 degrees or less. Each test sample of Examples 1-6 was judged to be satisfactory in the hydrophilicity test after the durability test of 96-960 hr.

Each test sample of Comparative Examples 1-2 was subjected to the same hydrophilicity durability test except in that it was conducted after 96 hr, 192 hr, 288 hr, 384 hr, 480 hr, 576 hr, 672 hr and 768 hr of the durability test. The test sample of Comparative Example 1 was judged to be unsatisfactory in this test, after the durability test of 96·768 hr. In fact, the contact angle of the test sample of Comparative Example 1 was 18 degrees after the durability test of 96 hr. In contrast, the test sample of Comparative Example 2 was judged to be satisfactory after the durability test of 96-768 hr.

Each test sample of Examples 1-6 was subjected to an image distortion evaluation test and an antifogging evaluation test, after 0 hr, 96 hr, 192 hr, 384 hr, 576 hr, 672 hr, 768 hr, 840 hr and 960 hr of the durability test. In the image distortion evaluation test, water was applied to the antifogging film to form a water film. After that, an image was observed by the naked eyes with respect to the light reflected from the water film and the light transmitted through the water film. The test sample was judged to be satisfactory if the image was not distorted. In the antifogging evaluation test, breath was blown to the antifogging film. Then, it was tried to read newspaper characters through the test sample. The test sample was judged to be satisfactory if this reading was possible. In fact, each test sample of Examples 1-6 was judged to be satisfactory in the image distortion evaluation test and the antifogging evaluation test.

Each test sample of Comparative Examples 1-2 was subjected to the same image distortion evaluation test and the same antifogging evaluation test, except that these tests were conducted after 0 hr, 96 hr, 192 hr, 288 hr, 384 hr, 480 hr, 576 hr, 672 hr and 768 hr of the durability test. The test sample of Comparative Example 1 was satisfactory in these tests after 0 hr of the durability test (i.e., immediately after the production of the test sample). It was, however, unsatisfactory in these tests after the durability test of 96-768 hr. In contrast, the test sample of Comparative Example 2 was satisfactory in these tests after the durability test of 0-768 hr.

An abrasion resistance test was conducted in accordance with JIS L 3120-1961-1206 by moving a cotton canvas cloth on the test sample in a reciprocative manner under a load of 100 g/cm² to complete 3,000 reciprocations. The test sample was judged to be satisfactory, when no noticeable scratches were found after the abrasion test, and when the contact angle of a water drop was 10 degrees or less after the abrasion test. Each test sample of Examples 1-6 and Comparative Example 1 was satisfactory in this test. That of Comparative Example 2 was unsatisfactory, since the entirety of the antifogging film was exfoliated from the substrate.

A warm water resistance test was conducted by immersing the test sample in warm water of 60°C for 96 hr and then by checking the external appearance of the antifogging film. After this immersion, a gauze cloth was strongly rubbed against the antifogging film in the warm water to see whether or not the film exfoliates from the substrate. The test sample was judged to be satisfactory when no noticeable scratches were found, when the antifogging film was not exfoliated by the rubbing, and when the contact angle of a water drop was 5 degrees or less. Each test sample of Examples 1-6 and Comparative Example 1 was satisfactory in this test. That of Comparative Example 2 was unsatisfactory, since the entirety of the antifogging film was exfoliated from the substrate.

An alkali resistance test was conducted by immersing the test sample in 1N NaOH aqueous solution for 48 hr at room temperature. After that, the external appearance was checked. The test sample was judged to be satisfactory when no discoloration of the antifogging film occurred and when the antifogging film was not exfoliated from the substrate. Each test sample of Examples 1-6 and Comparative Example 1 was satisfactory in this test. That of Comparative Example 2 was unsatisfactory, since the entirety of the antifogging film was exfoliated from the substrate.

The entire disclosure of Japanese Patent Application No. 2000-064361 filed on March 9, 2000, of which priority is claimed in the application, including specification, claims and summary, is incorporated herein by reference in its entirety.

## Claims

1. An antifogging article comprising:
a substrate; and
an antifogging film covering said substrate, said antifogging film comprising:
(a) 30-60 wt% of a metal oxide constituting a matrix phase of said antifogging film; and
(b) 40-70 wt% of ultrafine oxide particles constituting a dispersed phase of said antifogging film,
wherein said antifogging film is prepared by a process comprising (1) applying a sol comprising (i) a precursor of said metal oxide, (ii) said ultrafine oxide particles, and (iii) a strong acid catalyst to said substrate, thereby forming thereon a precursory film; and (2) heating said precursory film into said antifogging film.

2. An antifogging article according to claim 1, wherein said metal oxide comprises at least two selected from the group consisting of silica, zirconia, titania, and alumina.

3. An antifogging article according to claim 1, wherein said ultrafine oxide particles are made of at least one of silica and alumina.

4. An antifogging article according to claim 1, wherein said antifogging film is porous as a result of adding an organic polymer soluble in alcohol, to said sol, prior to said applying in said process.

5. An antifogging article according to claim 4, wherein said organic polymer is at least one selected from the group consisting of hydroxypropyl cellulose, polyvinyl pyrrolidone, polyvinyl acetate, polyvinyl alcohol, and polyethylene glycol.

6. An antifogging article according to claim 1, wherein said metal oxide is an amorphous metal oxide.

7. An antifogging article according to claim 2, wherein said metal oxide comprises silica and zirconia, and wherein a difference between a content of said silica by wt% in said antifogging film and a content of said zirconia by wt% in said antifogging film is not greater than 5 wt%.

8. An antifogging article according to claim 3, wherein said silica of said ultrafine oxide particles comprises a colloidal silica, and wherein said alumina of said ultrafine particles comprises an alumina having a crystal structure of boehmite.

9. An antifogging article according to claim 1, wherein said ultrafine oxide particles have a particle size of 50 nm or less.

10. An antifogging article according to claim 1, wherein said antifogging film has a thickness of 50 to 250 nm.

11. A coating agent for forming an antifogging film on a substrate, said coating agent comprising:
a precursor of a metal oxide, said metal oxide constituting a matrix phase of said antifogging film;
ultrafine oxide particles; and
a strong acid catalyst.

12. A coating agent according to claim 11, wherein said coating agent further comprises an organic polymer soluble in alcohol.

13. A coating agent according to claim 12, wherein said organic polymer is at least one selected from the group consisting of hydroxypropyl cellulose, polyvinyl pyrrolidone, polyvinyl acetate, polyvinyl alcohol, and polyethylene glycol.

14. A coating agent according to claim 11, wherein said ultrafine oxide particles are made of at least one of silica and alumina.

15. A coating agent according to claim 11, wherein said silica of said ultrafine oxide particles comprises a colloidal silica, and wherein said alumina of said ultrafine particles comprises an alumina having a crystal structure of boehmite.

16. A coating agent according to claim 11, wherein said ultrafine oxide particles have a particle size of 50 nm or less.

17. A process for producing an antifogging article, said antifogging article comprising:
a substrate; and
an antifogging film covering said substrate, said antifogging film comprising:
(a) a metal oxide constituting a matrix phase of said antifogging film; and
(b) ultrafine oxide particles constituting a dispersed phase of said antifogging film, said process comprising:
providing a sol comprising (i) a precursor of said metal oxide, (ii) said ultrafine oxide particles, and (iii) a strong acid catalyst;
applying said sol to said substrate, thereby forming thereon a precursory film; and
heating said precursory film at a temperature of 150 to 600°C into said antifogging film.

18. A process according to claim 17, wherein said strong acid catalyst of said sol comprises at least one selected from the group consisting of hydrochloric acid, sulfuric acid and nitric acid, and wherein said strong acid catalyst has a pH of 2 or lower.

19. A process according to claim 17, wherein said precursor comprises a metal element that is at least two selected from the group consisting of Si, Zr, Ti, and Al.

20. A process according to claim 17, wherein said precursor comprises at least one compound selected from the group consisting of metal alkoxides and metal chlorides.

21. A process according to claim 17, wherein said sol further comprises an organic polymer that is soluble in alcohol.

22. A process according to claim 21, wherein said organic polymer is at least one selected from the group consisting of hydroxypropyl cellulose, polyvinyl pyrrolidone, polyvinyl acetate, polyvinyl alcohol, and polyethylene glycol.

23. A process according to claim 17, wherein said ultrafine oxide particles are made of at least one of silica and alumina.

24. A process according to claim 23, wherein said silica of said ultrafine oxide particles comprises a colloidal silica, and wherein said alumina of said ultrafine particles comprises an alumina having a crystal structure of boehmite.

25. A process according to claim 17, wherein said ultrafine oxide particles have a particle size of 50 nm or less.
